# EUROPÄISCHE PATENTSCHRIFT

(11) **EP 1 645 601 B1**
(45) Veröffentlichungstag und Bekanntmachung des Hinweises auf die Patenterteilung: **16.07.2008**
(21) Anmeldenummer: 05020858.6
(22) Anmeldetag: 24.09.2005
(51) Int. Cl.: C09D 4/00, C09D 183/14, C08L 83/14

(54) **Hybride Decklacke**
Hybrid finish coatings
Couches de finition hybride

(30) Priorität: 07.10.2004 DE 102004048874
(43) Veröffentlichungstag der Anmeldung: 12.04.2006
(73) Patentinhaber: Bayer MaterialScience AG, 51368 Leverkusen (DE)
(72) Erfinder: Hofacker, Steffen, Dr., 51519 Oldenthal (DE); Mechtel, Markus, Dr., 51467 Bergisch Gladbach (DE); Klimmasch, Thomas, 51379 Leverkusen (DE)

(56) Entgegenhaltungen:
- EP-A- 0 465 918
- WO-A-98/38251
- US-A1- 2003 192 457

## Beschreibung

Die vorliegende Erfindung betrifft witterungsstabile Mischungen zur Herstellung von organischanorganischen (hybriden), transparenten Decklacken.

Durch die Synthese organisch-anorganischer Hybridmaterialien versucht man, typische Eigenschaften von anorganischen und organischen Stoffen in einem Material zu kombinieren. So zeichnen sich beispielsweise Gläser durch ihre große Härte und Säurebeständigkeit aus, während organische Polymere sehr elastische Materialien darstellen. In der Zwischenzeit sind vielerlei organisch-anorganische Hybridmaterialien bekannt, die auf der einen Seite deutlich härter als reine organische Polymere sind aber dennoch nicht die Sprödigkeit von rein anorganischen Materialien aufweisen.

Je nach Art und Weise der Wechselwirkung zwischen anorganischer und organischer Komponente klassifiziert man Hybridmaterialien in verschiedene Typen. Eine Übersicht hierzu findet sich in J. Mater. Chem. 6 (1996) 511.

Eine Klasse von Hybridmaterialien wird dadurch erhalten, dass durch Hydrolyse und Kondensation von (Halb)Metallalkoxyverbindungen wie z.B. Si(OEt)₄ ein anorganisches Netzwerk entsteht, welches mit klassischen organischen Polymeren, wie z.B. Polyestern oder Polyacrylaten eine Mischung darstellt, deren Polymerstränge sich gegenseitig durchdringen (,,interpenetrating network"). Eine kovalente chemische Anbindung des einen Netzwerks an das andere liegt nicht vor, sondern es bestehen, wenn überhaupt nur schwache Wechselwirkungen (wie z.B. van der Waals- oder Wasserstoffbrückenbindungen). Derartige Hybridmaterialien sind beispielsweise in WO 93/01226 und WO 98/38251 beschrieben.

WO 98/38251 lehrt, dass transparente Hybridmaterialien durch Mischungen von mindestens einem organischen Polymer, anorganischen Partikeln, einem anorganischen-organischen Bindemittel und Lösemittel erhältlich sind. In den Beispielen 8-10 werden Mischungen beschrieben, die sich als hybride Beschichtung z.B. durch ihre Härte, optische Transparenz und rissfreie Applikation auszeichnen. Neben den dort beschriebenen Eigenschaften ist vor allem im Bereich der Decklackbeschichtung für den Außenbereich die Außenbewitterungsbeständigkeit, also die Beständigkeit gegen UV-Licht unter gleichzeitigem Einfluss von klimatischen Bedingungen, von großer Wichtigkeit. Diese wird durch die in WO 98/38251 beschrieben Systeme nicht befriedigend gelöst.

So ist es im Bereich der Automobildecklackierung von großem Interesse, mittels eines Decklackes den darunter liegenden, farbtragenden Basislack, vor Witterungseinflüssen und UV-Licht zu schützen und somit über Jahre hinweg haltbar zu machen. Hierzu wurden in den vergangenen Jahren zahlreiche Decklacksysteme z.B. auf Basis der Polyurethanchemie entwickelt, die diese Aufgabe wahrnehmen und sich zudem durch einen hohen Glanz auszeichnen. Aufgrund der rein organischen Struktur dieser Lacksysteme weisen diese aber Nachteile im Bereich der gleichzeitigen Verbesserung von Kratzfestigkeit und Säurebeständigkeit solcher Polyurethansysteme auf. So zeigt sich z.B., dass durch Erhöhung der Netzwerkdichte durch geeignete Wahl der Isocyanatkomponente und der Hydroxylkomponente eine Verbesserung der Säurebeständigkeit erreicht werden kann, aber andererseits eine Sprödigkeit des Systems auftritt, welche zum Verlust von Kratzfesteigenschaften führt. Umgekehrt führt eine Verringerung der Netzwerkdichte durch höhere Elastizität zur einer Verbesserung der Kratzfestigkeit aber auf der anderen Seite zu einem Einbruch in der Säurebeständigkeit [MO Lackiertechnik, Jhrg. 54 (2000) 3].

Die grundsätzliche Verwendbarkeit von Ceroxidpartikeln als anorganischem UV-Absorber in anorganisch-organischen Hybridmaterialien ist in EP-A 465 918 beschrieben. Die Offenbarung sagt jedoch nichts darüber aus, in wie weit sich hierdurch das Bewitterungsverhalten, insbesondere hinsichtlich Glanzverhalten und Säurebeständigkeit, beeinflussen lassen. Ferner verschweigt EP-A 465 918 Details über die Größen der eingesetzten CeO₂-Partikel

Aufgabe der vorliegenden Erfindung war es nun, ausgehend von den in WO 98/38251 beschriebenen Systemen, Zusammensetzungen zur Herstellung organisch-anorganischer Hybridbeschichtungen bereitzustellen, die verbesserte Bewitterungsseigenschaften, insbesondere hinsichtlich UV-Beständigkeit, Glanzverhalten und Säurebeständigkeit aufweisen.

Es wurde nun gefunden, dass gerade dann farbfreie, transparente Beschichtungen mit den geforderten Eigenschaften erhalten werden, wenn man Mischungen aus organischen und anorganischen Polymeren einsetzt, die als anorganische Partikel anorganische UV-Absorber ausgewählt aus der Gruppe bestehend aus ZnO und CeO₂ enthalten, wobei mindestens 90 % aller verwendeten Partikel dieser Art eine mittlere Partikelgröße von ≤ 50 nm aufweisen.

Die mittlere Partikelgröße wird dabei mittels Ultrazentrifugenmessungen nach H.G. Müller, Colloid. Polym. Sci., 267 1113-1116 (1989) bestimmt.

Gegenstand der vorliegenden Erfindung sind daher hybride Zusammensetzungen enthaltend
A) ein anorganisches Bindemittel auf Basis von polyfunktionellen Organosilanen, die mindestens 2 Siliciumatome mit jeweils 1 bis 3 Alkoxy- oder Hydroxygruppen enthalten, wobei die Siliciumatome mit jeweils mindestens einer Si-C-Bindung an eine die Siliciumeinheit verknüpfende Baueinheit gebunden sind,
B) (Halb)Metallalkoxide und deren Hydrolyse- und Kondensationsprodukte,
C) anorganische UV-Absorber, ausgewählt aus der Gruppe bestehend aus ZnO und CeO₂ in Form von Partikeln, die zu mindestens 90 % einen mittels Ultrazentrifuge gemessenen mittleren Teilchendurchmesser von ≤ 50 nm aufweisen,
D) ein organisches Polyol mit einer Hydroxylfunktionalität ≥ 2 und einem zahlenmittleren Molekulargewicht von 250 g/mol bis 10 000 g/mol sowie
E) ein oder mehrere Lösemittel.

Anorganische Bindemittel der Komponente A) sind polyfunktionelle Organosilane, die mindestens 2, bevorzugt mindestens 3 Siliciumatome mit jeweils 1 bis 3 Alkoxy- oder Hydroxygruppen enthalten, wobei die Siliciumatome mit jeweils mindestens einer Si-C-Bindung an eine die Siliciumatome verknüpfende Baueinheit gebunden sind.

Als verknüpfende Baueinheiten im Sinne der Erfindung seien beispielhaft lineare oder verzweigte C₁- bis C₁₀-Alkylenketten, C₅- bis C₁₀-Cycloalkylenreste, aromatische Reste, z.B. Phenyl, Naphtyl oder Biphenyl, oder auch Kombinationen von aromatischen und aliphatischen Resten genannt. Die aliphatischen und aromatischen Reste können auch Heteroatome, wie Si, N, O, S oder F enthalten.

Beispiele für polyfunktionelle Organosilane sind Verbindungen der allgemeinen Formel (I)

R¹₄₋ᵢSi[(CH₂)ₙSi(OR²)ₐR³₃₋ₐ] (I)

mit
i = 2 bis 4, bevorzugt i = 4,
n = 1 bis 10, bevorzugt n = 2 bis 4, besonders bevorzugt n = 2
R¹ = Alkyl, Aryl
R² = Alkyl, Aryl, bevorzugt R² = Methyl, Ethyl, Isopropyl
R³ = Alkyl, Aryl, bevorzugt R³ = Methyl
a = 1 bis 3, für den Fall a = 1 kann R² auch Wasserstoff bedeuten.

Weitere Beispiele für polyfunktionelle Organosilane sind cyclische Verbindungen der allgemeinen Formel (II) 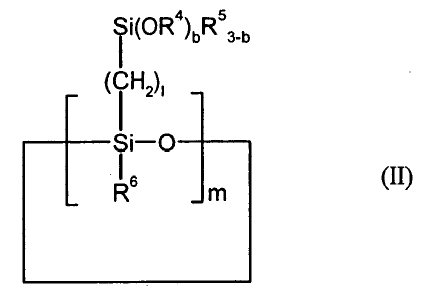 mit
m = 3 bis 6, bevorzugt m = 3 oder 4
1 = 2 bis 10, bevorzugt 1 = 2
R⁴ = Alkyl, Aryl, bevorzugt R⁴ = Methyl, Ethyl, Isopropyl
R⁵ = Alkyl, Aryl, bevorzugt R⁵ = Methyl
R⁶ = C₁-C₆ Alkyl oder C₆-C₁₄ Aryl, bevorzugt R⁶ = Methyl, Ethyl, besonders bevorzugt R⁶ = Methyl
b = 1 bis 3, für den Fall b = 1 kann R⁴ auch Wasserstoff bedeuten

Weitere Beispiele für polyfunktionelle Organosilane sind Verbindungen der allgemeinen Formel (III)

Si[OSiR⁷₂(CH₂)ₚSi(OR⁸)_{c}R⁹_{3-c}]₄ (III)

mit p = 1 bis 10, bevorzugt p = 2 bis 4, besonders bevorzugt p = 2,
R⁷ = Alkyl, Aryl, bevorzugt R⁷ = Methyl
R⁸ = Alkyl, Aryl, bevorzugt R⁸ = Methyl, Ethyl, Isopropyl
R⁹ = Alkyl, Aryl, bevorzugt R⁹ = Methyl
c = 1 bis 3, für den Fall c = 1 kann R⁸ auch Wasserstoff bedeuten

Weiterhin seien als polyfunktionelle Organosilane Silanole bzw. Alkoxide z.B.:
a.) Si[(CH₂)₂Si(OH)(CH₃)₂]₄
b.) *cyclo*-{OSiMe[(CH₂)₂Si(OH)Me₂]}₄
c.) *cyclo*-{OSiMe[(CH₂)₂Si(OEt)₂Me]}₄
d.) *cyclo*-{OSiMe[(CH₂)₂Si(OMe)Me₂]}₄
e.) *cyclo*-{OSiMe[(CH₂)₂Si(OEt)₃]}₄
genannt.

Ebenfalls einsetzbar sind die Oligomere, d.h. die Hydrolyse- und Kondensationsprodukte der vorgenannten Verbindungen und aus Verbindungen gemäß der Formeln (I), (II) und/oder (III).

Besonders bevorzugt basieren die anorganischen Bindemittel der Komponente A) auf *cyclo-*{OSiMe[(CH₂)₂Si(OH)Me₂]}₄ und/oder *cyclo*-{OSiMe[(CH₂)₂Si(OEt)₂Me]}.

Die (Halb)Metallalkoxide der Komponente B) werden durch die allgemeine Formel (IV)

R¹⁰_{x-y}M(OR¹¹)_{y} (IV)

mit
M = Si, Sn, Ti, Zr (x = 4, y = 1 bis 4) oder
M = B, Al (x = 3, y = 1 bis 3),
R¹⁰, R¹¹ = Alkyl, Aryl,
bevorzugt R¹⁰, R¹¹ = Methyl, Ethyl, Isopropyl, n-Butyl, sec-Butyl, tert-Butyl, Phenyl,
besonders bevorzugt R¹⁰, R¹¹ = Methyl und Ethyl
beschrieben.

Beispiele sind Si(OEt)₄, Si(OMe)₄, H₃C-Si(OEt)₃, H₃C-Si(OMe)₃, B(OEt)₃, Al(OⁱPr)₃, oder Zr(OⁱPr)₄. Im Sinn der Erfindung können anstelle der monomeren Alkoxide auch deren Hydrolyse-und Kondensationsprodukte verwendet werden. Kommerziell erhältlich sind zum Beispiel Si(OEt)₄-Kondensate.

Besonders bevorzugt werden in Komponente B) Si(OEt)₄ und dessen Hydrolyse- und /oder Kondensationsprodukte eingesetzt.

Die anorganischen UV-Absorber der Komponente C) weisen bevorzugt eine mittlere Partikelgröße von ≤ 30 nm auf.

Bevorzugt weisen mindestens 98 %, besonders bevorzugt mindestens 99,5 % aller verwendeten Partikel die geforderte mittlere Teilchengröße auf.

Diese anorganischen UV-Absorber können sowohl als Substanz bevorzugt jedoch in Form von Dispersionen (Sole) eingesetzt werden. Als Lösemittel können hierbei sowohl Wasser, wässrige Säuren oder Basen als auch organische Lösemittel oder Mischungen daraus eingesetzt werden.

Besonders bevorzugt werden in C) Dispersionen (Sole) von ZnO und/oder CeO₂, ganz besonders bevorzugt säurestabilisierte Dispersionen (Sole) von CeO₂ der vorstehend genannten Größenbereiche eingesetzt.

Organische Polyole D) sind solche mit einer Hydroxylfunktionalität ≥ 2 und einem zahlenmittleren Molekulargewicht von bevorzugt 500 g/mol bis 5 000 g/mol. Dabei werden bevorzugt handelsübliche hydroxylfunktionelle Polymere, z.B. auf Basis von Polyestern, Polycarbonaten, Polyacrylaten oder Polymethacrylaten sowie Mischungen und/oder Copolymeren daraus eingesetzt.

Als Lösemittel E) seien beispielhaft genannt: Alkohole, wie Methanol, Ethanol, Isopropanol, 2-Butanol, 1,2-Ethandiol oder Glycerin, Ketone, wie Aceton, Methylethylketon, Methylisobutylketon oder Butanon, Ester, wie Essigsäureethylester oder Methoxypropylacetat, Aromaten, wie Toluol oder Xylol, Ether, wie tert.-Butylmethylether, sowie aliphatische Kohlenwasserstoffe. Bevorzugt werden polare Lösemittel und besonders bevorzugt werden Alkohole eingesetzt. Es können natürlich auch Gemische von verschiedenen Lösemittel eingesetzt werden. Bevorzugt werden Lösemittelgemische mit Alkohol- und/oder Esteranteilen von mehr als 50 Gew.-% besonders bevorzugt von mehr als 80 Gew.-% eingesetzt.

Die Menge des Lösemittels E) wird bevorzugt so gewählt, dass der Feststoffgehalt der Zusammensetzung bei 5 bis 75 Gew.-%, besonders bevorzugt bei 25 bis 55 Gew.-%, liegt.

Die erfindungsgemäßen Zusammensetzungen können darüber hinaus auch Katalysatoren enthalten, die zur Beschleunigung der Hydrolyse- und Kondensationsreaktionen dienen. Als Katalysatoren können organische und anorganische Säuren und Basen sowie metallorganische Verbindungen, Fluoridverbindungen oder auch Metallalkoxide eingesetzt werden. Als Beispiele seien genannt: Essigsäure, p-Toluolsulfonsäure, Salzsäure, Schwefelsäure, Ammoniak, Dibutylamin, Kaliumhydroxid, Natriumhydroxid, Ammoniumfluorid, Natriumfluorid, oder Aluminiumisopropylat.

In einer bevorzugten Ausführungsform der Erfindung weisen die erfindungsgemäßen Zusammensetzungen unter Vernachlässigung der Lösemittel E)

| | |
|---|---|
| 1 bis 20 Gew.-% | anorganisches Bindemittel A), |
| 25 bis 80 Gew.-% | (Halb)Metallalkoxide B), |
| 0,1 bis 20 Gew.-% | anorganische UV-Absorber C) und |
| 10 bis 60 Gew.-% | organisches Polyol D) |

auf, wobei sich die Bestandteile A) bis D) zu 100 Gew.-% aufaddieren.

In einer besonders bevorzugten Ausführungsform der Erfindung weisen diese Zusammensetzungen

| | |
|---|---|
| 5 bis 15 Gew.% | anorganisches Bindemittel A), |
| 40 bis 65 Gew.-% | (Halb)Metallalkoxide B), |
| 0,2 bis 10 Gew.-% | anorganische UV-Absorber C) und |
| 20 bis 45 Gew.-% | organisches Polyol D) |

auf, wobei sich die Bestandteile A) bis D) zu 100 Gew.-% addieren.

Die erfindungsgemäßen Zusammensetzungen werden typischerweise hergestellt, in dem zunächst die Komponenten A) und B) sowie ggf. Anteile der Komponente E) vorgelegt und anschließend ggf. durch Säurezugabe (teil)hydrolysiert werden und schließlich Komponente C) und ggf. weitere Komponente E) unter Rühren und ggf. unter Kühlung zugegeben werden. Anschließend erfolgt die Zugabe der Komponente D).

Die anorganischen UV-Absorber C) werden somit bevorzugt durch Einrühren in die erfindungsgemäße Komponente A) und/oder B) in die erfindungsgemäße Zusammensetzung a) eingebracht. Ein Einrühren in die organische Polyolkomponente, welche später mittels Isocyanatgruppen vernetzt wird, ist nicht bevorzugt.

Ein weiterer Gegenstand der vorliegenden Erfindung sind Beschichtungsmittel, mindestens enthaltend
a) eine der vorstehend beschriebenen erfindungsgemäßen hybriden Zusammensetzungen sowie
b) einen gegenüber OH-Gruppen reaktiven Vernetzer.

Bevorzugt werden in b) Polyisocyanate und/oder Polyisocyanatgemische eingesetzt.

Bei solchen Polyisocyanaten bzw. Polyisocyanatgemischen handelt es sich um beliebige, durch Modifizierung einfacher aliphatischer, cycloaliphatischer, araliphatischer und/oder aromatischer Diisocyanate hergestellte, aus mindestens zwei Diisocyanaten aufgebaute Polyisocyanate mit Uretdion-, Isocyanurat-, Allophanat-, Biuret-, Iminooxadiazindion- und/oder Oxadiazintrionstruktur, wie sie beispielsweise in J. Prakt. Chem. 336 (1994) 185 - 200, den Schriften DE-A 16 70 666, 19 54 093, 24 14 413, 24 52 532, 26 41 380, 37 00 209, 39 00 053 und 39 28 503 oder den EP-A 336 205, 339 396 und 798 299 beispielhaft beschrieben sind.

Geeignete Diisocyanate zur Herstellung solcher Polyisocyanate sind beliebige durch Phosgenierung oder nach phosgenfreien Verfahren, beispielsweise durch thermische Urethanspaltung, zugängliche Diisocyanate des Molekulargewichtsbereichs 140 bis 400 mit aliphatisch, cycloaliphatisch, araliphatisch und/oder aromatisch gebundenen Isocyanatgruppen, wie z. B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanato-methylcyclohexan, Bis-(isocyanatomethyl)-norbornan, 1,3- und 1,4-Bis-(2-isocyanato-prop-2-yl)-benzol (TMXDI), 2,4- und 2,6-Diisocyanatotoluol (TDI), 2,4'- und 4,4'-Diisocyanatodiphenylmethan (MDI), 1,5-Diisocyanatonaphthalin oder beliebige Gemische solcher Diisocyanate.

Bevorzugt handelt es sich um Polyisocyanate oder Polyisocyanatgemische der genannten Art mit ausschließlich aliphatisch und/oder cycloaliphatisch gebundenen Isocyanatgruppen.

Ganz besonders bevorzugt sind Polyisocyanate bzw. Polyisocyanatgemische mit Isocyanuratstruktur auf Basis von HDI, IPDI und/oder 4,4'-Diisocyanatodicyclohexylmethan.

Ferner ist es ebenso möglich so genannte blockierte Polyisocyanate und/oder Isocyanate, bevorzugt blockierte Polyisocyanate bzw. Polyisocyanatgemische, ganz besonders bevorzugt blockierte Polyisocyanate bzw. Polyisocyanatgemische mit Isocyanuratstruktur auf Basis von HDI, IPDI und/oder 4,4'-Diisocyanatodicyclohexylmethan einzusetzen.

Die Blockierung von (Poly)Isocyanaten zum zeitweisen Schutz der Isocyanatgruppen ist eine seit langem bekannte Arbeitsmethode und wird z.B. in Houben Weyl, Methoden der organischen Chemie XIV/2, S. 61-70 beschrieben.

Als Blockierungsmittel kommen z.B. alle Verbindungen in Betracht, die bei Erhitzen des blockierten (Poly)Isocyanats gegebenenfalls unter Anwesenheit eines Katalysators abgespalten werden können. Geeignete Blockierungsmittel sind z.B. sterisch anspruchsvolle Amine wie Dicyclohexylamin, Diisopropylamin, N-tert-Butyl-N-benzylamin, Caprolactam, Butanonoxim, Imidazole mit den verschiedenen denkbaren Substitutionsmustern, Pyrazole wie 3,5-Dimethylpyrazol, Triazole und Tetrazole, ebenso Alkohole wie Isopropanol, Ethanol. Daneben besteht auch die Möglichkeit, die Isocyanatgruppe so zu blockieren, dass bei einer Weiterreaktion nicht das Blockierungsmittel abgespalten wird, sondern die intermediär gebildete Zwischenstufe abreagiert. Dies ist insbesondere beim Cyclopentanon-2-carboxyethylester der Fall, der bei der thermischen Vernetzungsreaktion vollständig in das polymere Netzwerk einreagiert und nicht wieder abgespalten wird.

Als Katalysatoren für die Reaktion der erfindungsgemäßen Zusammensetzungen mit den Polyisocyanaten können Katalysatoren wie handelsübliche Organometallverbindungen der Elemente Aluminium, Zinn, Zink, Titan, Mangan, Eisen, Bismut oder auch Zirkonium wie z.B. Dibutylzinnlaurat, Zinkoctoat, Titantetraisopropylat verwendet werden. Darüber hinaus eignen sich aber auch tertiäre Amine wie z.B. 1,4-Diazabicyclo-[2.2.2]-octan.

Ferner ist es möglich die Umsetzung der Polyisocyanate aus b) mit den erfindungsgemäßen Zusammensetzungen aus a) zu beschleunigen, in dem diese bei Temperaturen zwischen 20 und 200°C bevorzugt zwischen 60 und 180°C, besonders bevorzugt zwischen 70 und 150°C durchgeführt wird.

Das Verhältnis von a) zu b) wird dabei so bemessen, dass ein NCO/OH-Verhältnis der freien und gegebenenfalls blockierten NCO-Gruppen aus b) zu den OH-Gruppen der Komponente D) aus a) von 0,3 bis 2, bevorzugt 0,4 bis 1,5 besonders bevorzugt 0,5 bis 1,0 resultiert.

In Abmischungen mit den in der Beschichtungstechnologie üblichen Hilfsstoffe, wie anorganische oder organische Pigmente, weitere organische Lichtschutzmittel, Radikalfänger, Lackadditive, wie Dispergier-, Verlauf-, Verdickungs-, Entschäumungs- und andere Hilfsmittel, Haftmittel, Fungizide, Bakterizide, Stabilisatoren oder Inhibitoren und weitere Katalysatoren können aus den erfindungsgemäßen Zusammensetzung insbesondere in Form der erfindungsgemäßen Beschichtungsmittel hochresistente Lacke für den Automobilbau hergestellt werden.

Darüber hinaus können die erfindungsgemäßen Beschichtungsmittel auch Anwendung in den Bereichen Kunststofflackierung, Bodenbeschichtung und/oder Holz-/Möbellackierung finden.

### Beispiele

Soweit nicht anders vermerkt beziehen sich alle Prozentangaben auf Gewichtsprozent.

*cyclo*-{OSiMe[(CH₂)₂Si(OEt)₂Me]}₄ (D4-Diethoxid) wurde wie in Beispiel 2 in WO 98/38251 beschrieben hergestellt.

Die Kratzfestigkeitsprüfungen der hergestellten Beschichtungen erfolgte gemäß DIN 55668. Die Lösemittel und Säurebeständigkeiten wurden visuell überprüft mit der Bewertung: ,,0" (unverändert) bis ,,5" (deutlich verändert: z.B. Blasenbildung, Ab- oder Auflösung, Erweichung etc.).

### Herstellung einer erfindungsgemäßen Zusammensetzung

### Beispiel 1

In einem 4 l Mehrhalskolben wurden 204,7 g D4-Diethoxid, 1054,1 g Tetraethoxysilan, 309,7 g Ethanol, 929,2 g 2-Butanol und 103,3 g Butylglykol vorgelegt, homogenisiert und anschließend zunächst 108,4 g 0,1 molare Salzsäure unter Rühren zugegeben. Nach einer Rührzeit von 30 Minuten wurden weitere 111,2 g 0,1 molare Salzsäure unter Rühren hinzugegeben und 60 Minuten nachgerührt. Danach wurden 56,8 g Cerdioxid-Partikel (Cerium Colloidal 20%, Fa. Rhodia GmbH, Frankfurt/Main, Deutschland) unter Rühren und anschließend 55,1 g 2,5%ige Essigsäure zugegeben. Nach 24 Stunden Reifung, wurden 1132,4 g Leichtsieder bei 80 mbar und 40 °C Wasserbadtemperatur am Rotationsverdampfer ins Vakuum abgezogen.

Schließlich wurden 1593,0 g der erhaltenen Mischung mit 948,0 g eines Acrylatpolyols mit einer Hydroxylzahl von 93,5 mg KOH / g (Desmophen® A 665 BA/X, Fa. Bayer MaterialScience AG, Leverkusen, Deutschland) gemischt und homogenisiert.

Die so erhaltene erfindungsgemäße Mischung hat eine theoretische Hydroxylzahl bezogen allein auf die organische Polyolkomponente von 29,6 mg KOH / g und einen Festkörpergehalt von 39,9 Gew.-%.

### Herstellung eines erfindungsgemäßen Beschichtungsmittels

### Beispiel 2

| | |
|---|---|
| 83,2 Gew.-% | einer aus Beispiel 1 erhaltenen Mischungen wurde mit |
| 0,4 Gew.-% | Baysilone® OL 17, 10%-ig in Xylol (Borchers GmbH, Langenfeld, Deutschland), |
| 0,8 Gew.-% | BYK® -070 (BYK-Chemie GmbH, Wesel, Deutschland), |
| 0,4 Gew.% | Tinuvin 123 (Ciba Spezialitätenchemie Lampertheim GmbH, Lampertheim, Deutschland), |
| 0,6 Gew.-% | Tinuvin 384-2 (Ciba Spezialitätenchemie Lampertheim GmbH, Lampertheim, Deutschland) und |
| 5,8 Gew.% | einer 1:1 Mischung aus 1-Methoxypropylacetat und Solvent Naphta 100 (Kraemer&Martin GmbH, St. Augustin, Deutschland) |

additiviert.

Danach wurden 8,8 Gew.-% eines blockierten Polyisocyanates auf Basis eine HDI-Trimerisats (Desmodur® VPLS 2253, Bayer MaterialScience AG, Leverkusen, Deutschland) zugegeben und die erhaltene Beschichtungslösung unmittelbar danach mittels Sprühapplikation auf ein mit konventionellem Basislack beschichtetes Blech aufgetragen. Nach einer Ablüftzeit von ca. 10 Minuten bei Raumtemperatur wurde das System bei 140 °C 30 Minuten getrocknet. Es wurde eine transparente Beschichtung mit Schichtdicke von 40 bis 60 µm erhalten.

### Beispiel 3

| | |
|---|---|
| 88,4 Gew.-% | einer aus Beispiel 1 erhaltenen Mischung wurde mit |
| 0,4 Gew.-% | Baysilone® OL 17, 10%-ig in Xylol (Borchers GmbH, Langenfeld, Deutschland), |
| 0,8 Gew.-% | BYK® -070 (BYK-Chemie GmbH, Wesel, Deutschland), |
| 0,4 Gew.-% | Tinuvin 123 (Ciba Spezialitätenchemie Lampertheim GmbH, Lampertheim, Deutschland), |
| 0,6 Gew.-% | Tinuvin 384-2 (Ciba Spezialitätenchemie Lampertheim GmbH, Lampertheim, Deutschland) und |
| 4,3 Gew.-% | einer 1:1 Mischung aus 1-Methoxypropylacetat und Solvent Naphta 100 (Kraemer&Martin GmbH, St. Augustin, Deutschland) |

additiviert.

Danach wurden 5,1 Gew.% eines Polyisocyanates auf Basis eines HDI-Trimerisats (Desmodur® N 3390, Bayer MaterialScience AG, Leverkusen, Deutschland) zugegeben und die erhaltene Beschichtungslösung unmittelbar danach mittels Sprühapplikation auf ein mit konventionellem Basislack beschichtetes Blech aufgetragen. Nach einer Ablüftzeit von ca. 10 Minuten bei Raumtemperatur wurde das System bei 140 °C 30 Minuten getrocknet. Es wurde eine transparente Beschichtung mit Schichtdicke von 40 bis 60 µm erhalten.

### Vergleichsbeispiel 1

1021,0 g Tetraethoxysilan und 250 g Ethanol wurden mit 87,5 g 0,1 N p-Toluolsulfonsäure versetzt und 1 Stunde bei Raumtemperatur gerührt. Anschließend wurden 125 g SiO₂₋Nanopartikel-Dispersion (Levasil® 200 S, HC Starck GmbH & Co. KG, Goslar, Deutschland) mit einigen Tropfen konzentrierter Schwefelsäure auf pH = 2 eingestellt, in 50 g Ethanol gelöst und unter Rühren langsam zu der erhaltenen Mischung getropft. Nach weiteren 15 Minuten Rühren wurden 1000 g 2-Butanol zugegeben und bei einer Ölbadtemperatur von max. 110 °C bei Normaldruck 1210,0 g Leichtsieder abdestilliert. Anschließend wurde der Rückstand gewogen und mit 2-Butanol auf 1328,0 g aufgefüllt. Das erhaltene Hydrolysat wurde abschließend filtriert. Man erhält eine transluzente Lösung.

581,1 g des erhaltenen Hydrolysats wurden mit 252,1 g eines Acrylatpolyols (Desmophen® A 665 BA/X, Bayer MaterialScience AG, Leverkusen, Deutschland) gemischt.

### Vergleichsbeispiel 2

| | |
|---|---|
| 81,5 Gew.-% | einer aus Vergleichsbeispiel 1 erhaltenen Mischung wurde mit |
| 0,4 Gew.% | Baysilone® OL 17, 10%-ig in 1-Methoxypropylacetat (MPA) (Borchers GmbH, Langenfeld, Deutschland), |
| 0,8 Gew.-% | BYK® -070 (BYK-Chemie GmbH, Wesel, Deutschland), |
| 0,4 Gew.-% | Tinuvin 123 (Ciba Spezialitätenchemie Lampertheim GmbH, Lampertheim, Deutschland) und |
| 0,6 Gew.-% | Tinuvin 384-2 (Ciba Spezialitätenchemie Lampertheim GmbH, Lampertheim, Deutschland) |

additiviert.

Danach wurden 5,8 Gew.-% eines blockierten Polyisocyanates auf Basis eine HDI-Trimerisats (Desmodur® VPLS 2253, Bayer MaterialScience AG, Leverkusen, Deutschland) zugegeben 15 Minuten gerührt und 24 Stunden bei Raumtemperatur reifen lassen. Zur Herstellung der Beschichtungslösung wurde die erhaltene Mischung unter Rühren mit 4,7 Gew.-% D4-Diethoxid und 5,8 Gew.-% 0,1 N p-Toluolsulfonsäure versetzt. Nach einer Reifezeit von 2 Stunden wurde die erhaltene Beschichtungslösung mittels Sprühapplikation auf ein mit konventionellem Basislack beschichtetes Blech aufgetragen. Nach einer Ablüftzeit von ca. 10 Minuten bei Raumtemperatur wurde das System bei 140 °C 30 Minuten getrocknet. Es wurde eine transparente Beschichtung mit Schichtdicke von 40 bis 60 µm erhalten.

### Vergleichsbeispiel 3

| | |
|---|---|
| 54,3 Gew.-% | eines Acrylatpolyols (Desmophen® A 665 BA/X, Fa. Bayer MaterialScience AG, Leverkusen, Deutschland) wurden mit |
| 0,5 Gew.-% | Baysilone® OL 17, 10%-ig in 1-Methoxypropylacetat (MPA) (Borchers GmbH, Langenfeld, Deutschland), |
| 0,5 Gew.-% | Modaflow 1%-ig in 1-Methoxypropylacetat (MPA) (Monsanto Co, St.Louis, USA), |
| 1,1 Gew.% | Tinuvin 292, 50%-ig in 1-Methoxypropylacetat (MPA) (Ciba Spezialitätenchemie Lampertheim GmbH, Lampertheim, Deutschland), |
| 1,6 Gew.-% | Tinuvin 384-2 50%-ig in 1-Methoxypropylacetat (MPA) (Ciba Spezialitäten-chemie Lampertheim GmbH, Lampertheim, Deutschland) und |
| 21,6 Gew.% | einer 1:1 Mischung aus 1-Methoxypropylacetat und Solvent Naphta 100 (Kraemer&Martin GmbH, St. Augustin, Deutschland) |

additiviert.

Danach wurden 20,4 Gew.-% eines Polyisocyanates auf Basis eine HDI-Trimerisats (Desmodur® N 3390, Bayer MaterialScience AG, Leverkusen, Deutschland) zugegeben und die erhaltene Beschichtungslösung unmittelbar danach mittels Sprühapplikation auf ein mit konventionellem Basislack beschichtetes Blech aufgetragen. Nach einer Ablüftzeit von ca. 10 Minuten bei Raumtemperatur wurde das System bei 140 °C 30 Minuten getrocknet. Es wurde eine transparente Beschichtung mit Schichtdicke von 40 bis 60 µm erhalten.

### Vergleichsbeispiel 4

| | |
|---|---|
| 42,9 Gew.-% | eines Acrylatpolyols (Desmophen® A 665 BA/X, Fa. Bayer MaterialScience AG, Leverkusen, Deutschland) wurden mit |
| 0,5 Gew.% | Baysilone® OL 17, 10%-ig in 1-Methoxypropylacetat (MPA) (Borchers GmbH, Langenfeld, Deutschland), |
| 0,5 Gew.-% | Modaflow 1%-ig in 1-Methoxypropylacetat (MPA) (Monsanto Co, St.Louis, USA), |
| 1,0 Gew.-% | Tinuvin 292 50%-ig in 1-Methoxypropylacetat (MPA) (Ciba Spezialitätenchemie Lampertheim GmbH, Lampertheim, Deutschland), |
| 1,5 Gew.-% | Tinuvin 384-2 50%-ig in 1-Methoxypropylacetat (MPA) (Ciba Spezialitäten-chemie Lampertheim GmbH, Lampertheim, Deutschland), |
| 2,5 Gew.-% | Dibutylzinndilaurat 10%ig in 1-Methoxypropylacetat (MPA) und |
| 21,0 Gew.% | einer 1:1 Mischung aus 1-Methoxypropylacetat und Solvent Naphtha 100 (Kraemer&Martin GmbH, St. Augustin, Deutschland) |

additiviert.

Danach wurden 30,1 Gew.-% eines blockierten Polyisocyanates auf Basis eine HDI-Trimerisats (Desmodur® VPLS 2253, Bayer MaterialScience AG, Leverkusen, Deutschland) zugegeben und die erhaltene Beschichtungslösung unmittelbar danach mittels Sprühapplikation auf ein mit konventionellem Basislack beschichtetes Blech aufgetragen. Nach einer Ablüftzeit von ca. 10 Minuten bei Raumtemperatur wurde das System bei 140 °C 30 Minuten getrocknet. Es wurde eine transparente Beschichtung mit Schichtdicke von 40 bis 60 µm erhalten.

**Tabelle 1: Vergleich der lacktechnologischen Eigenschaften**

| | **relativer Restglanz** | **Säurebeständigkeit** | **Bewitterungsstabilität** |
|---|---|---|---|
| **Beispiel 2** | 86 % | 52 °C | o.B.; > 1000 h |
| **Beispiel 3** | 83% | 52 °C | o.B.; > 1000 h |
| **Vergleichsbeispiel 2** | n.b. | n.b. | Risse; 100 h |
| **Vergleichsbeispiel 3** | 66 % | 44 °C | o.B.; > 1000 h |
| **Vergleichsbeispiel 4** | 66 % | 45 °C | o.B.; > 1000 h |

| | | | |
|---|---|---|---|
| n.b.: nicht bestimmt o.B.: ohne Befund | | | |

### relativer Restglanz:

der relative Restglanz in % gibt wieder, wie hoch der Glanzgrad [20°] nach Verkratzung gemäß DIN 5668 im Vergleich zum Glanzgrad vor Verkratzung liegt. Je höher dieser Wert ist, desto besser ist die Kratzbeständigkeit. Der Ausgangsglanz vor der Verkratzung lag bei allen Systemen zwischen 87 und 92 %.

### Säurebeständigkeit:

Die Säurebeständigkeit wird in °C Einheiten wiedergegeben. Dazu wird die Beschichtung mit 1 %-iger Schwefelsäure beträufelt und in einem Gradientenofen getempert. Die Temperatur bei der erstmals sichtbare Schädigungen der Beschichtung auftreten ist in Tabelle 1 wiedergegeben. Je höher diese Temperatur liegt, desto beständiger ist die Beschichtung gegen Säure.

### Bewitterungsbeständigkeit:

Die Beschichtungen wurden einem Schnellbewitterungstest (CAM 180 gemäß VDA 621-429) unterzogen. Das Versagen der Beschichtung war dann gegeben, wenn Risse, Blasen, Trübungen oder starke Verfärbungen auftraten. Die Zeit bis zum Versagen und dessen Art ist in Tabelle 1 wiedergegeben.

Wie aus Tabelle 1 hervorgeht können mit Hilfe der erfindungsgemäßen Mischungen und der daraus erhaltenen Beschichtungsmittel deutlich verbesserte Lackeigenschaften hinsichtlich der gleichzeitigen Verbesserung von Säurebeständigkeit und Kratzfestigkeit sowie der Bewitterungsstabilität erreicht werden.

## Patentansprüche

1. Hybride Zusammensetzungen enthaltend
A) ein anorganisches Bindemittel auf Basis von polyfunktionellen Organosilanen, die mindestens 2 Siliciumatome mit jeweils 1 bis 3 Alkoxy- oder Hydroxygruppen enthalten, wobei die Siliciumatome mit jeweils mindestens einer Si-C-Bindung an eine die Siliciumeinheit verknüpfende Baueinheit gebunden sind,
B) (Halb)Metallalkoxide und deren Hydrolyse- und Kondensationsprodukte,
C) anorganische UV-Absorber, ausgewählt aus der Gruppe bestehend aus ZnO und CeO₂ in Form von Partikeln, die zu mindestens 90 % einen mittels Ultrazentrifuge gemessenen mittleren Teilchendurchmesser von ≤ 50 nm aufweisen,
D) einem organischen Polyol mit einer Hydroxylfunktionalität ≥ 2 und einem zahlenmittleren Molekulargewicht von 250 g/mol bis 10 000 g/mol sowie
E) einem oder mehreren Lösemitteln.

2. Hybride Zusammensetzungen gemäß Anspruch 1, **dadurch gekennzeichnet, dass** die anorganischen Bindemittel in A) auf *cyclo*-{OSiMe[(CH₂)₂Si(OH)Me₂]}₄ und/oder *cyclo-*{OSiMe[(CH₂)₂Si(OEt)₂Me]} basieren.

3. Hybride Zusammensetzungen gemäß Anspruch 1 oder 2, **dadurch gekennzeichnet, dass** die (Halb)Metallalkoxide der Komponente B) monomeres Si(OEt)₄ oder die Hydrolyse- und /oder Kondensationsprodukte von Si(OEt)₄ sind.

4. Hybride Zusammensetzungen gemäß einem der Ansprüche 1 bis 3, **dadurch gekennzeichnet, dass** in Komponente C) CeO₂ Partikel eingesetzt werden, die zu mindestens 98 % eine mittlere Partikelgröße von ≤ 30 nm aufweisen.

5. Hybride Zusammensetzungen gemäß einem der Ansprüche 1 bis 4, **dadurch gekennzeichnet, dass** bei derer Herstellung die anorganischen UV-Absorber in eine der Komponenten A) oder B) eingerührt werden, bevor eine Vermischung mit dem organischen Polyol D) erfolgt.

6. Verwendung von hybriden Zusammensetzungen gemäß einem der Ansprüche 1 bis 5 bei der Herstellung von Beschichtungen.

7. Beschichtungsmittel, mindestens enthaltend
a. eine hybride Zusammensetzung gemäß einem der Ansprüche 1 bis 5 sowie
b. einen gegenüber OH-Gruppen reaktiven Vernetzer.

8. Beschichtungsmittel gemäß Anspruch 7, **dadurch gekennzeichnet, dass** als gegenüber OH-Gruppen reaktive Vernetzer Polyisocyanate oder Polyisocyanatgemische eingesetzt werden.

9. Substrate beschichtet mit Beschichtungen erhältlich unter Verwendung von hybriden Zusammensetzungen gemäß einem der Ansprüche 1 bis 5.

## Claims

1. Hybrid compositions comprising
A) an inorganic binder based on polyfunctional organosilanes which contain at least 2 silicon atoms having in each case 1 to 3 alkoxy or hydroxyl groups, the silicon atoms being attached by in each case at least one Si-C bond to a structural unit that links the silicon unit,
B) (semi)metal alkoxides and their hydrolysis products and condensation products,
C) inorganic UV absorbers selected from the group consisting of ZnO and CeO₂ in the form of particles at least 90% of which have an average particle diameter as measured by ultracentrifuge of ≤ 50 nm,
D) an organic polyol having a hydroxyl functionality ≥ 2 and a number-average molecular weight of 250 g/mol to 10 000 g/mol, and
E) one or more solvents.

2. Hybrid compositions according to Claim 1, **characterized in that** the inorganic binders in A) are based on *cyclo*-{OSiMe[(CH₂)₂Si(OH)Me₂]}₄ and/or *cyclo-*{OSiMe[(CH₂)₂Si(OEt)₂Me]}.

3. Hybrid compositions according to Claim 1 or 2, **characterized in that** the (semi)metal alkoxides of component B) are monomeric Si(OEt)₄ or the hydrolysis products and/or condensation products of Si(OEt)₄.

4. Hybrid compositions according to one of Claims 1 to 3, **characterized in that** in component C) CeO₂ particles are used at least 98% of which have an average particle size of ≤ 30 nm.

5. Hybrid compositions according to one of Claims 1 to 4, **characterized in that** in the course of their preparation the inorganic UV absorbers are incorporated with stirring into one of components A) or B) before mixing with the organic polyol D) takes place.

6. Use of hybrid compositions according to one of Claims 1 to 5 in the production of coatings.

7. Coating materials at least comprising
a. a hybrid composition according to one of Claims 1 to 5 and
b. a crosslinker which is reactive towards OH groups.

8. Coating materials according to Claim 7, **characterized in that** polyisocyanates or polyisocyanate mixtures are used as crosslinkers which are reactive towards OH groups.

9. Substrates coated with coatings obtainable using hybrid compositions according to one of Claims 1 to 5.

## Revendications

1. Compositions hybrides contenant
A) un liant inorganique à base d'organosilanes polyfonctionnels, lesquels contiennent au moins deux atomes de silicium avec à chaque fois de 1 à 3 groupes alcoxy ou hydroxy, les atomes de silicium étant liés avec à chaque fois au moins une liaison Si-C sur une unité de structure raccordée à l'unité silicium,
B) des alcoxydes de (semi)métaux et leurs produits d'hydrolyse et de condensation,
C) des absorbeurs UV inorganiques choisis parmi ZnO et CeO₂ dans la forme de particules qui présentent pour au moins 90 % un diamètre moyen de particules mesuré au moyen d'une ultracentrifugation ≤ 50 nm,
D) un polyol organique avec une fonctionnalité hydroxyle ≥ 2 et un poids moléculaire moyen en nombre de 250 g/mol à 10 000 g/mol ainsi que
E) un ou plusieurs solvants.

2. Compositions hybrides selon la revendication 1, **caractérisées en ce que** le liant inorganique dans A) est à base de *cyclo-*{OSiMe[(CH₂)₂Si(OH)Me₂]}₄ et/ou de *cyclo*-{QSiMe[(CH₂)₂Si(OEt)₂Me]}.

3. Compositions hybrides selon la revendication 1 ou 2, **caractérisées en ce que** les alcoxydes de semi(métaux) du constituant B) sont des monomères Si(OEt)₄ ou les produits d'hydrolyse et/ou de condensation de Si(OEt)₄.

4. Compositions hybrides selon l'une quelconque des revendications 1 à 3, **caractérisées en ce que** l'on utilise dans le constituant C) des particules de CeO₂ qui présentent pour au moins 98 % une taille moyenne de particules ≤ 30 nm.

5. Compositions hybrides selon l'une quelconque des revendications 1 à 4, **caractérisées en ce que**, lors de leur préparation, on introduit en agitant les absorbeurs UV inorganiques dans un des constituants A) ou B) avant de réaliser un mélange avec le polyol organique D).

6. Utilisation de compositions hybrides selon l'une quelconque des revendications 1 à 5 pour la préparation de revêtements.

7. Agents de revêtement contenant au moins
a. une composition hybride selon l'une quelconque des revendications 1 à 5 ainsi que
b. un agent de réticulation réactif par rapport aux groupes OH.

8. Agents de revêtement selon la revendication 7, **caractérisés en ce que** l'on utilise comme agents de réticulation réactifs aux groupes OH des polyisocyanates ou des mélanges de polyisocyanates.

9. Substrats revêtus de revêtements obtenus en utilisant des compositions hybrides selon l'une quelconque des revendications 1 à 5.
